# EUROPÄISCHE PATENTSCHRIFT

(11) **EP 2 439 436 B1**
(45) Veröffentlichungstag und Bekanntmachung des Hinweises auf die Patenterteilung: **27.05.2020**
(21) Anmeldenummer: 11180853.1
(22) Anmeldetag: 12.09.2011
(51) Int. Cl.: F16L 11/08

(54) **Wärme oder Hitze ausgesetzter Artikel, insbesondere ein Ladeluftschlauch**
Item exposed to heat or warmth, in particular a charge air hose
Chaleur ou article exposé à la chaleur, notamment un tuyau d'air de suralimentation

(30) Priorität: 11.10.2010 DE 102010038083
(43) Veröffentlichungstag der Anmeldung: 11.04.2012
(73) Patentinhaber: ContiTech MGW GmbH, 34346 Hannoversch-Münden (DE)
(72) Erfinder: Brill, Hartmut, 37242 Bad Sooden-Allendorf (DE); Dill, Robert, 37083 Göttingen (DE); Seibold, Sebastian, 34346 Hannoversch Münden (DE)
(74) Vertreter: Finger, Karsten

(56) Entgegenhaltungen:
- EP-A1- 1 162 061
- DE-A1- 2 237 561
- JP-A- 2000 202 963
- US-A- 3 101 110
- US-A- 3 652 375
- US-A1- 2009 223 586
- US-B1- 6 279 966

## Beschreibung

Die Erfindung betrifft einen Artikel mit einem Grundkörper aus einem Polymerwerkstoff, wobei die Artikeloberfläche vollständig oder teilweise einer Wärme oder Hitze, insbesondere Strahlungswärme oder Strahlungshitze, ausgesetzt ist. Ein Beispiel eines solchen Körpers findet sich z.B. in Dokument US6279966.

Es gibt eine umfassende Entwicklungsarbeit, die sich mit der Bereitstellung von Schutzschichten für Polymer-Artikel befasst, und zwar unter den verschiedensten Gesichtspunkten. Im Folgenden wird die Entwicklung von Schutzschichten an drei Artikelgruppen näher aufgezeigt.

### Schlauchförmige Körper

Schlauchförmige Körper umfassen die Artikel Schläuche (Förderschläuche) aller Art, Luftfederbälge (Kreuzlagenbälge, Axialbälge) und Kompensatoren in verschiedenen Ausführungen (z.B. Torsionskompensator, Lateralkompensator). Das Aufbaukonzept ist dabei überall gleich, nämlich umfassend eine Außenschicht (Mantel), eine Innenschicht (Seele) sowie insbesondere einen eingebetteten ein- oder mehrlagigen Festigkeitsträger. Zusätzlich kann noch wenigstens eine Zwischenschicht, beispielsweise zwischen zwei Festigkeitsträgerlagen, vorhanden sein. Bei Förderschläuchen kann die Innenschicht noch einen medienbeständigen Inliner, beispielsweise in Form einer PTFE-Folie, aufweisen, beispielsweise bei Chemikalienschläuchen. Auch eine zusätzliche Barriereschicht mit geringer Permeationsrate, insbesondere in Form von Folien, beispielsweise als Polyamidfolie, kann vorhanden sein, wobei hier insbesondere Klimaschläuche zu nennen sind. Die Außenschicht eines schlauchförmigen Körpers, insbesondere die gesamte Oberfläche der Außenschicht, kann mit einer Schutzschicht ausgestattet sein. Diesbezüglich wird insbesondere auf folgenden Stand der Technik verwiesen:
- Aus der Offenlegungsschrift DE 100 61 182 A1 ist ein Schlauch bekannt, auf dessen Außenschicht ein wendelförmiger Folienstreifen aufgebracht ist, und zwar zwecks Schutzes gegen Abrieb. Der Folienstreifen besteht dabei vorzugsweise aus einer UHMwPE-Folie.
- Wird ein Schlauch nahe an heißen Gegenständen und Bauteilen vorbei geführt, wobei im Automobil insbesondere Motor oder Teile des Abgasstranges (z.B. Katalysator) zu nennen sind, so kann die abgestrahlte Wärme des Gegenstandes den Schlauch thermisch altern und angreifen, womit die Lebensdauer des Schlauches herabgesetzt wird.

Bei niedriger Umgebungstemperatur ist man somit zum Einsatz eines temperaturstabileren Polymertyps gezwungen. Die derzeit hitzestabilen Polymertypen im Elastomerbereich sind Fluorkautschuk (FKM) und Silikonkautschuk (z.B. VMQ). Diese werden nur durch erheblich teuere Perfluorkautschuke (FFKM) oder Polytetrafluorethylen (PTFE) übertroffen. Ist die eingestrahlte Wärme für die oben genannten Polymere immer noch so hoch, so wird zumeist zusätzlich ein Hitzeschutzschild eingeführt. Diese sind in der Regel aus Metall (z.B. Stahl, Aluminium) und werden entweder direkt als Trennwand zwischen das heiße Bauteil und den Schlauch eingebaut oder in Form eines Rohres bzw. Wellrohres oder Schlauches, beispielsweise aus einer (laminierten) Aluminiumfolie oder einem Gewebe, auf den Schlauch aufgesteckt (DE 697 03 435 T2).

Die Nachteile der oben genannten Trennwand sind jedoch die immer brisanter werdende Platznot sowie das zusätzliche Gewicht. Der Nachteil des Überrohres ist insbesondere die mangelnde Anpassung des Rohres an die Schlauchgeometrie.
- Die Luftfeder gilt im Allgemeinen als wartungsfreies Bauteil, obwohl sie permanent betrieblichen Belastungen und Einflüssen aus der Umwelt ausgesetzt ist. Durch den mechanischen Verschleiß, nämlich durch Abrasion, Adhäsion am Kolben, Ermüdung durch wechselnde Spannungen und Verformungen, wird die Oberfläche des Luftfederbalges rissig, insbesondere in der stark belasteten Rollfalte. Umweltfaktoren, wie beispielsweise aggressive Medien und Strahlung, verstärken die Rissbildung und das Risswachstum. Die zunächst sehr kleinen, äußerlichen Risse wachsen sowohl entlang der Oberfläche als auch in die Tiefe der Balgwand und erreichen schließlich die äußere Gewebelage. Zwar ist die Luftfeder dann immer noch dicht und daher betriebstauglich, jedoch besteht die Gefahr, dass eindringende Medien und Fremdkörper die Balgwand schädigen.

Um einer schnellen Alterung entgegenzuwirken, werden der Mischung für das Außenpolymer geeignete Chemikalien (z.B. Weichmacher, UV-Schutz) hinzugefügt. Auf der Oberfläche der Balgwand bildet sich eine dünne Schutzschicht. Wird diese abgetragen, beispielsweise durch Hochdruckreinigung, diffundieren die Schutzmittel aus der Balgwand an die Oberfläche, bis der "eingebaute" Vorrat erschöpft ist.

In der Offenlegungsschrift WO 2008/141857 A1 wird eine Schutzschicht für Oberflächen von elastomeren Elementen, insbesondere für die Balgwand eines Luftfederbalges, beschrieben. Die Schutzschicht ist dabei aus einem Fluorkautschuk mit eingebetteten Mikropartikeln gebildet, wobei die Mikropartikel gegen elektromagnetische Strahlungen, insbesondere Wärmestrahlen, eine hohe Reflexionsfähigkeit aufweisen. Diese Mikropartikel, die auch als Reflexionspartikel bezeichnet werden, bestehen insbesondere aus Aluminium, das im Fluorkautschuk eingemischt ist. Außerdem wirkt eine derartige Schutzschicht zusätzlich gegen Abrieb.

In der Offenlegungsschrift DE 10 2009 044 533 A1 wird beispielsweise für schlauchförmige Körper, insbesondere für einen Luftfederbalg, eine diesbezügliche Weiterentwicklung beschrieben. Dabei umfasst die Schutzschicht einen polymeren Basiswerkstoff, in dem Mikropartikel mit Reflexionsfähigkeit eingemischt sind, wobei der polymere Basiswerkstoff ein Polymerisat ist, das zumindest aus einem ersten Reaktionspartner in Form eines Isocyanats mit wenigstens zwei NCO-Gruppen und einem zweiten Reaktionspartner in Form von Wasser gebildet ist.

### Antriebsriemen

Antriebsriemen, die zumeist mit einem eingebetteten Festigkeitsträger mit in Längsrichtung verlaufenden parallel angeordneten Zugträgern (Zugstränge) versehen sind, kommen in verschiedenen Ausführungsformen vor, und zwar als Flachriemen, Keilriemen, Keilrippenriemen, Zahnriemen und Verbundseile, die jeweils einen Unterbau mit einer Kraftübertragungszone und eine Decklage als Riemenrücken aufweisen. Der wesentliche Unterschied liegt dabei in der Konstruktion der Kraftübertragungszone, bedingt durch unterschiedliche Oberflächengeometrien, beispielsweise durch eine zahnförmige Profilierung bei Zahnriemen. Die Schutzschicht kommt insbesondere bei der Kraftübertragungszone, gegebenenfalls zusätzlich auch bei der Decklage zur Anwendung. Dieses Beschichtungskonzept kann zudem zusätzlich bei der Kantenversiegelung zum Einsatz gelangen.

Antriebsriemen werden zur Erhöhung der Abriebsbeständigkeit sowie zusätzlich zur Geräuschreduzierung insbesondere im Bereich der Kraftübertragungszone mit einer Schutzschicht versehen. Der diesbezügliche Stand der Technik ist:
- Eingesetzt wird eine Flockauflage (DE 100 16 351 A1), insbesondere in Form eines Baumwoll- oder Aramidflocks, oder eine dünne mit Fasern (z.B. Aramidfasern) gefüllte elastische Polymerschicht, beispielsweise nach der Offenlegungsschrift DE 38 23 157 A1, wobei die Anhaftung der Flockauflage zumeist mittels einer Streichlösung erfolgt.
- Verwendet wird eine Textilauflage in Form eines Gewebes oder Gestricks, beispielsweise nach der Patentschrift US 3 981 206.
- Verwendet wird auch eine Textilauflage in Form eines Gewirkes. Diesbezüglich wird insbesondere auf die Offenlegungsschrift DE 10 2006 007 509 A1 verwiesen. Die Kettwirkware besteht dabei aus einem ersten Garn, insbesondere aus einem Polyamid oder einem Polyester, und aus einem zweiten Garn, insbesondere aus einem Polyurethan.
- Nach einer neueren Entwicklung gemäß DE 10 2008 012 044 A1 werden anstelle der Textilauflagen oder in Kombination mit diesen eine Folie (z.B. PTFE-Folie) oder ein Folienverbund (z.B. PA-PTFE-Folienverbund) eingesetzt, insbesondere unter dem zusätzlichen Aspekt der ölbeständigen Ausrüstung eines Antriebsriemens.
- Die Schutzschicht ist eine Reaktionsmasse, wobei ein Isocyanat mit wenigstens zwei NCO-Gruppen mit Wasser und/oder einem Diol und/oder einem Polyol zu einem Polymerisat ausreagiert. Diesbezüglich wird insbesondere auf die neuere Entwicklung gemäß EP 2 101 079 A2 verwiesen.

### Mehrschichtige Stoffbahnen

Mehrschichtige Stoffbahnen umfassen zumeist wenigstens eine Elastomerschicht, Festigkeitsträgerschicht und Barriereschicht mit geringer Permeationsrate, insbesondere in Form von Folien, beispielsweise als Polyamid-Folie. Sie kommen zur Bildung von flexiblen Behältern, Planen, Schutzanzügen, Zelten, Rettungsinseln, Membranen oder Faltenbälgen zur Anwendung. Dabei ist es ausreichend, wenn nur die Seite der Stoffbahn, die zu schützen ist, mit der Schutzschicht ausgestattet ist. Bei Schutzanzügen bietet die neue Schutzschicht in Kombination mit der Barriereschicht einen optimalen Personenschutz.

Auf dem Gebiet der mehrschichtigen Stoffbahnen wird nun insbesondere auf folgenden Stand der Technik eingegangen:
- Aus der Patentschrift EP 1 326 745 B1 ist ein flexibles Laminatbahnmaterial für Feuerschutzanzüge bekannt. Diese Bahn besteht dabei aus einer ersten Schicht in Form einer Folie aus temperaturbeständigem Polymermaterial sowie aus einer zweiten Schicht aus nichtmetallischen Fasern. Diese beiden Schichten sind mittels einer Haftschicht miteinander verbunden. Als Folienwerkstoffe kommen Polyamide (PA), Polyvinylfluorid (PVF), Polyvinylidenfluorid (PVDF), Polytetrafluorethylen (PTFE) sowie Silikonharze zur Anwendung. Die zweite Schicht ist aus Glasfasern, Aramidfaser, Keramikfasern, Siliciumnitridfasern oder Siliciumcarbidfasern gebildet. Die Wirksamkeit der Feuerschutzanzüge kommt hier durch die Kombination beider Schichten zum tragen, wobei die nichtmetallischen Fasern die flammhemmende Grundwirkung übernehmen.
- In der Offenlegungsschrift WO 2008/071604 A1 wird die Verwendung einer flammhemmenden Silikonkautschukmischung insbesondere zur Bildung von Faltenbälgen, beispielsweise als Gelenkteile für Busse, Schienenfahrzeuge und Fluggastbrücken, beschrieben.

Die Aufgabe der Erfindung besteht nun darin, einen Artikel bereitzustellen, der auch unter dem Einfluss von Wärme oder Hitze, insbesondere von Strahlungswärme oder Strahlungshitze, eine hohe Lebensdauer aufweist. Dabei soll die Umsetzung platzsparend wie auch unter Verzicht auf aufwendige Schutzvorrichtungen durchführbar sein. Darüber hinaus soll das hiermit verbundene Werkstoffkonzept einer Vielzahl von Artikelanwendungen zugänglich sein.

Gelöst wird diese Aufgabe dadurch, dass der Polymerwerkstoff des Grundkörpers aus einer rußfreien Polymermischung besteht, in der Mikropartikel mit Reflexionsfähigkeit eingemischt sind.

Durch dieses neue Werkstoffkonzept wird durch Reflexion die thermische Beanspruchung des Artikels gesenkt.

In Bezug auf den Polymerwerkstoff des Grundkörpers stehen zahlreiche Möglichkeiten zur Verfügung, insbesondere bei einem mehrschichtigen Artikel mit wenigstens zwei Polymerschichten. Es kommen insbesondere folgende Werkstoffvarianten zum Einsatz:

### - Variante A (Elastomere)

Der Polymerwerkstoff ist eine vulkanisierte thermoplastfreie Kautschukmischung, enthaltend:
(a) wenigstens eine Kautschukkomponente sowie
(b) Mischungsingredienzien.

Als Kautschukkomponenten sind insbesondere zu nennen:
Ethylen-Propylen-Kautschuk (EPM)
Ethylen-Propylen-Dien-Kautschuk (EPDM)
Nitrilkautschuk (NBR)
(teil)hydrierter Nitrilkautschuk (HNBR)
Fluor-Kautschuk (FKM)
Perfluor-Kautschuk (FFKM)
Chloropren-Kautschuk (CR)
Naturkautschuk (NR)
Styrol-Butadien-Kautschuk (SBR)
Isopren-Kautschuk (IR)
Butylkautschuk (IIR)
Brombutylkautschuk (BIIR)
Chlorbutylkautschuk (CIIR)
Bromiertes Copolymer aus Isobutylen und Paramethylstyrol (BIMS)
Butadien-Kautschuk (BR)
Chloriertes Polyethylen (CM)
Chlorsulfoniertes Polyethylen (CSM)
Polyepichlorhydrin (ECO)
Terpolymere des ECO mit Ethylenoxid und ungesättigten Monomeren (ETER)
Ethylen-Vinylacetat-Kautschuk (EVA)
Acrylat-Kautschuk (ACM)
Ethylen-Acrylat-Kautschuk (AEM)
Silikonkautschuk (MQ, VMQ, PVMQ, FVMQ; DE 10 2006 058 470 A1)
Fluorierter Methylsilikonkautschuk (MFQ)
Perfluorinierter Propylen-Kautschuk (FFPM)
Polurethan (PU)

Die vorgenannten Kautschuktypen können unverschnitten sein. Auch der Einsatz eines Verschnittes, insbesondere in Verbindung mit einem der vorgenannten Kautschuktypen, beispielsweise ein NR/BR-Verschnitt oder ein BR/SBR-Verschnitt, ist möglich.

Von besonderer Bedeutung sind: ACM, AEM, BIMS, CM, CR, IIR, BIIR, CIIR, ECO, EPM, EPDM, ETER, EVA, FKM, NBR, HNBR, VMQ oder FVMQ.

Die üblichen Mischungsingredienzien umfassen wenigstens ein Vernetzungsmittel und/oder einen Beschleuniger. Häufig wird ein Vernetzersystem (Vernetzungsmittel und Beschleuniger) eingesetzt. Zusätzliche Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Farbpigmente, Verstärkungsfasern). Diesbezüglich wird auf den allgemeinen Stand der Kautschukmischungstechnologie verwiesen.

### - Variante B (Thermoplastische Elastomere)

Der Polymerwerkstoff ist ein thermoplastisches Vulkanisat, enthaltend:
(a) wenigstens eine Thermoplastkomponente;
(b) wenigstens eine Kautschukkomponente, die zumindest teilvernetzt ist sowie
(c) Mischungsingredienzien.

Die bevorzugten Thermoplastkomponenten sind ein:
Polyolefin, insbesondere Polyethylen (PE) oder Polypropylen (PP)
Polystyrol
Polyamid (PA), beispielsweise PA6 oder PA6.6
Polyester, beispielsweise PET, PEN oder PBT

Als Kautschukkomponenten sind hier insbesondere EPM, EPDM, SBR, CR, NR, NBR, FKM, ACM oder AEM zu nennen, die insbesondere mit keiner weiteren Kautschukkomponente verschnitten sind.

Hinsichtlich der üblichen Mischungsingredienzien wird auf die Mischungstechnologie zu der Variante A, insbesondere auf die Lehre gemäß der Offenlegungsschrift DE 100 04 632 A1 verwiesen.

### - Variante C (Thermoplaste)

Der Polymerwerkstoff ist ein thermoplastische Kunststoff, enthaltend:
(a) wenigstens eine Thermoplastkomponente sowie
(b) gegebenenfalls Mischungsingredienzien.

Die bevorzugten Thermoplastkomponenten sind ein:
Polyolefin, insbesondere Polyethylen (PE) oder Polypropylen (PP)
Polyamid (PA), beispielsweise PA6 oder PA6.6
Fluorkunststoff

Hinsichtlich der Fluorkunststoffe sind insbesondere folgende Typen zu nennen:
Polytetrafluorethylen (PTFE)
Modifiziertes Polytetrafluorethylen (TFM)
Fluorethylenpolymer (FEP)
Perfluoralkylvinylether-Tetraethylen-Copolymer (PFA)
Ethylen-Tetrtafluorethylen-Copolymer (ETFE)
Polyvinylfluorid (PVF)
Polyvinylidenfluorid (PVDF)

Eine herausragende Bedeutung hat dabei PTFE erlangt.

Von besonderer Bedeutung sind die Werkstoffvarianten A und B, da diese dem Artikel elastische Eigenschaften verleihen. Besonders hervorzuheben ist dabei wiederum die Werkstoffvariante A.

Besteht der gesamte Polymerwerkstoff des Grundkörpers aus der Polymermischung gemäß Kennzeichen des Anspruchs 1, so enthalten die Mischungsingredienzien die erforderlichen Mikropartikel mit Reflexionsfähigkeit. Besteht der Polymerwerkstoff des Grundkörpers nur teilweise aus der Polymermischung gemäß Kennzeichen des Anspruchs 1, so enthalten die Mischungsingredienzien der entsprechenden reflektierenden Polymerschicht, beispielsweise die der Außenschicht eines schlauchförmigen Körpers, die erforderlichen Mikropartikel mit Reflexionsfähigkeit.

Hinsichtlich der Mikropartikel mit Reflexionsfähigkeit gelten vorzugsweise folgende Werkstoffgesichtspunkte:
- Die Mikropartikel liegen pulverförmig vor.
- Die Mikropartikel sind Metallpartikel. Diese bestehen wiederum aus Aluminium und/oder Messing, wobei Messing besonders zu nennen ist.
- Die Mikropartikel sind gleichmäßig verteilt in der rußfreien Polymermischung eingemischt.
- Die Mikropartikel sind in einer Menge von 5 Gew.-% bis 30 Gew.-%, insbesondere 5 Gew.-% bis 20 Gew.-%, insbesondere wiederum 5 Gew.-% bis 15 Gew.-%, vorhanden.

Der Artikel kann ein Schlauch, ein Luftfederbalg, ein Kompensator, eine mehrschichtige Stoffbahn zur Bildung von flexiblen Behältern, Planen, Schutzanzügen, Zelten, Rettungsinseln, Membranen oder Faltenbälgen, ein Antriebsriemen, ein Fördergurt oder ein Dämpfungselement eines Lagers, einer Buchse oder einer Schichtfeder sein.

Im Folgenden wird anhand dieser Artikel das neue Werkstoffkonzept näher erläutert.

### - Schlauchförmige Körper

Schlauchförmige Körper als Einheitsbegriff für Schläuche, Luftfederbälge und Kompensatoren bestehen zumeist aus wenigstens drei Schichten, nämlich einer Innenschicht, Außenschicht sowie aus einer zwischen diesen beiden Schichten eingebetteten Festigkeitsträgerschicht.

Nach einer ersten Variante, betreffend Schläuche, Luftfederbälge und Kompensatoren, besteht ausschließlich die Außenschicht, die einer besonders hohen Strahlungshitze ausgesetzt sein kann, aus der rußfreien Polymermischung gemäß Kennzeichen des Anspruchs 1. Eingesetzt werden dabei als Polymerkomponenten insbesondere FKM, FFKM, VMQ, FVMQ oder PTFE. Diese Werkstofftypen zeichnen sich durch eine hohe Hitzebeständigkeit aus, die nun durch Einmischen der Mikropartikel mit Reflexionsfähigkeit noch erhöht wird. Eine reflektierende Schutzschicht nach der eingangs erwähnten Lehre gemäß WO 2008/141857 A1 und DE 10 2009 044 533 A1, die auf die Außenschicht aufgebracht wird, entfällt. Unter Vereinfachung des Schichtenaufbaus übernimmt also die Außenschicht die reflektierende Eigenschaft. Die Innenschicht besteht dagegen aus einer Polymermischung gemäß dem Stand der Technik, beispielsweise aus einer Kautschukmischung auf der Basis von AEM.

Nach einer zweiten Variante, betreffend Schläuche, kann zusätzlich auch die Innenschicht mit der rußfreien Polymermischung gemäß Kennzeichen des Anspruchs 1 versehen sein., beispielsweise als zusätzlicher Hitzeschutz oder im Rahmen einer thermischen Isolation, um eine Abkühlung des zu transportierenden Mediums im Schlauch zu minimieren (Thermoskanneneffekt). Hier wird man dann auch die oben genannten Polymerkomponenten, beispielsweise VMQ, einsetzen.

Nach einer dritten Variante, betreffend Schläuche, wird ausschließlich die Innenschicht mit der rußfreien Polymermischung gemäß Kennzeichen des Anspruchs 1 ausgestattet. Dies ist dann der Fall, wenn die Außenschicht keiner nennenswerten Wärme oder Hitze ausgesetzt ist. Dieser Fall liegt dann vor, wenn bei dem Schlauch lediglich der "Thermoskanneneffekt" genutzt werden soll.

Eventuell weiter vorhandene polymere Zwischenschichten können gegebenenfalls in das neue Werkstoffkonzept einbezogen werden.

Insbesondere auf dem Schlauchsektor finden die in der vorgenannten Gesamtübersicht erwähnten Polymertypen eine breite Anwendung.

### - Mehrschichtige Stoffbahnen

Bei mehrschichtigen Stoffbahnen, beispielsweise zur Bildung von Schutzanzügen, genügt es zumeist, die Außenschicht oder eine auf die Außenschicht aufgebrachte dünne Deckschicht mit der rußfreien Polymermischung gemäß Kennzeichen des Anspruchs 1 auszustatten. So kann beispielsweise eine Außenschicht aus einer flammhemmenden Silikonkautschukmischung nach der Lehre gemäß WO 2008/071604 A1 mit einer rußfreien Polymermischung gemäß Kennzeichen des Anspruchs 1 umgesetzt werden. Auch die Alternative dahingehend, die flammhemmende Silikonkautschukmischung nach dem oben zitierten Stand der Technik zusätzlich mit einer dünnen Deckschicht aus der rußfreien Polymermischung gemäß Kennzeichnen des Anspruchs 1 zu versehen, ist möglich.

Bei anderen mehrschichtigen Stoffbahnen, beispielsweise zur Bildung von Zelten, ist es vorteilhaft, die Innenschicht und Außenschicht mit der rußfreien Polymermischung nach dem Kennzeichen des Anspruchs 1 auszustatten.

### - Antriebsriemen

Bei Antriebsriemen ist es vorteilhaft, ausschließlich eine dünne Deckschicht aus der rußfreien Polymermischung gemäß Kennzeichen des Anspruchs 1, beispielsweise auf der Basis von FKM oder VMQ, auf die Kraftübertragungszone und/oder Riemenrücken aufzubringen. Auf dieser Grundlage können die bei Antriebsriemen bevorzugten Kautschukmischungen auf der Basis von HNBR (bei Zahnriemen) oder EPM oder EPDM (bei Keilriemen oder Keilrippenriemen) unverändert eingesetzt werden.

### - Fördergurte

Bei Fördergurten, umfassend eine tragseitige und laufseitige Deckplatte, ist es wie bei den Antriebsriemen vorteilhaft, wenn ausschließlich eine dünne Deckschicht aus der rußfreien Polymermischung gemäß Kennzeichen des Anspruchs 1, beispielsweise wiederum auf der Basis von FKM oder VMQ, auf die tragseitige und/oder laufseitige Deckplatte aufgebracht wird. Man kann dann weiterhin die klassischen Fördergurt-Kautschukmischungen, beispielsweise auf der Basis von CR, ausnutzen.

### - Dämpfungselemente

Bei Dämpfungselementen, beispielsweise im Fahrzeug- und Maschinenbau (z.B. Schiffskupplungen), werden häufig hitzebeständige Kautschukmischungen auf der Basis Silikonkautschuk, beispielsweise VMQ, eingesetzt. Um die Elastizität des Grundkörpers beizubehalten, ist es vorteilhaft, auch hier nur eine dünne Deckschicht aus der rußfreien Polymermischung gemäß Kennzeichen des Anspruchs 1, beispielsweise auf der Basis von VMQ, auf den Elastomerkörper aufzutragen

Bei der Herstellung von schlauchförmigen Körpern kommen je nach der Dimension Dornwerkzeuge oder Extrusionswerkszeuge zum Einsatz. Bei Antriebsriemen oder anderen Formartikeln sind Formwerkzeuge (Unter- und Oberform) von Bedeutung. Bei bahnförmigen Gebilden, beispielsweise bei mehrschichtigen Stoffbahnen, kommt der Kalander zum Einsatz. Die Polymermischung gemäß Kennzeichen des Anspruchs 1 ist in diesem Sinne extrudierbar und kalandrierbar und kann zudem durch Spritzguss zu Formartikeln verarbeitet werden.

Die Erfindung wird nun anhand von Ausführungsbeispielen unter Bezugnahme auf schematische Zeichnungen erläutert. Es zeigen:
- Fig. 1: einen Schlauch 1 als Krümmerschlauch mit Anwendung in der Ladelufttechnologie;
- Fig. 2: einen Prüfaufbau zur Messung von Probekörpern;
- Fig. 3: ein Vergleichsdiagramm mit drei Kurven a, b und c.

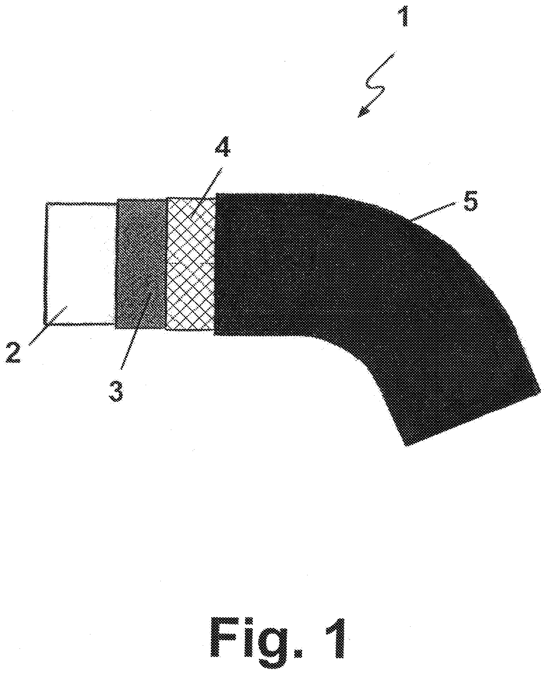

Die Figur 1 zeigt einen Schlauch 1 als Krümmerschlauch mit Anwendung in der Ladelufttechnologie, beispielsweise nach der Offenlegungsschrift DE 10 2009 026 254 A1. Der Schlauch weist dabei folgenden Schichtenaufbau mit folgender beispielhafter Werkstoffkonzeption auf:
- Innenschicht 2:: verschnittfreie ACM- oder AEM-Kautschukmischung
- Haftschicht 3:: verschnittfreie EPM- oder EPDM-Kautschukmischung
- Festigkeitsträgerschicht 4:: Textilfäden aus Aramid
- Außenschicht 5:: verschnittfreie VMQ- oder FVMQ-Kautschukmischung mit reflektierenden Eigenschaften

Die Haftschicht 3 hat bei diesem Ausführungsbeispiel die Bedeutung einer Zwischenschicht und bildet mit der Innenschicht 2 einen Haftverbund.

Die Außenschicht 5 ist hier also frei von einer zusätzlichen Schutzschicht, die reflektierend ausgerüstet ist, und zwar unter Vereinfachung des Schichtenaufbaus.

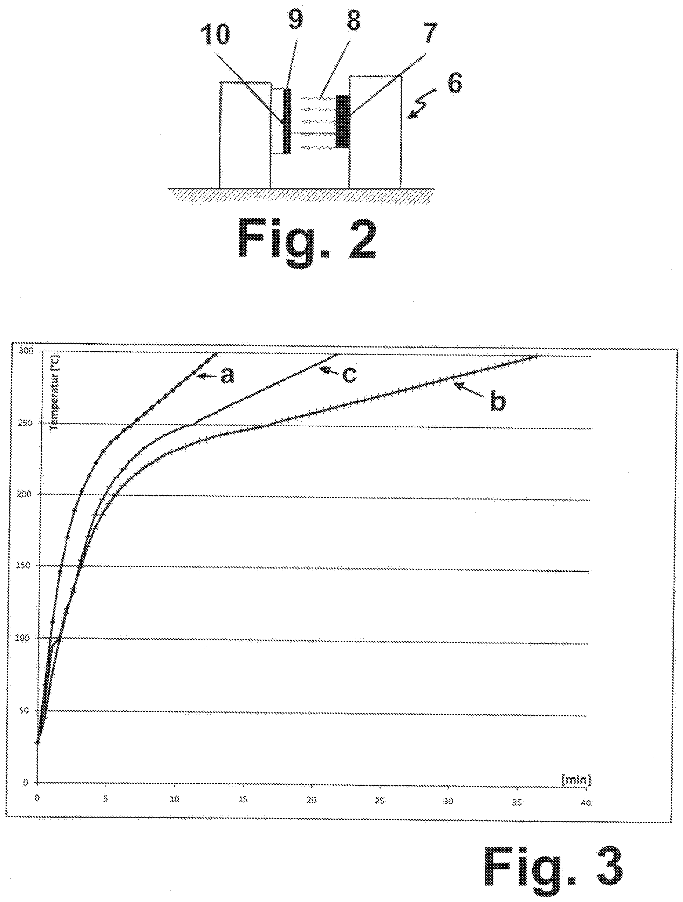

Fig. 2 zeigt den Prüfaufbau 6, wobei eine Wärmequelle 7 eine Wärmestrahlung 8 in Richtung des Probenkörpers 9 aussendet. Die Erfassung der Daten erfolgen dabei innerhalb des Messpunktes 10.

Im Zusammenhang mit dieser Prüfung werden nun drei Proben a, b und c mit einer unterschiedlichen Rezeptur in Gew.-%, die in der folgenden Tabelle erfasst sind, näher untersucht.

**Tabelle**

| **Bestandteil** | **Probe a** | **Probe b** | **Probe c** |
|---|---|---|---|
| Silikonkautschuk (i) | 97 | 91 | 90 |
| Messingpartikel (ii) | - | 8 | - |
| Aluminiumpartikel | - | - | 9 |
| Schwarzer Farbbatch (iii) | 2 | - | - |
| Perkadox BC-FF (iv) | 1 | 1 | 1 |

(i) insbesondere VMQ oder FVMQ
(ii) Kupfer-Zink-Legierung, auch Gelbguss oder Goldbronze genannt
(iii) mit Rußpartikel gefüllt
(iv) Vernetzer Dicumylperoxid bzw. nach IUPAC: Bis(1-methyl-1-phenylethyl)peroxid

Den Proben a, b und c liegen jeweils Vulkanisate zugrunde.

Fig. 3 zeigt nun anhand eines Kurvenverlaufs das Ergebnis eines Vergleichsversuchs, und zwar unter folgenden Kriterien:

| | |
|---|---|
| Ordinate: | Temperatur in °C |
| Abszisse: | Zeit in Minuten (min) |
| Kurve a: | Probe a gemäß Tabelle |
| Kurve b: | Probe b gemäß Tabelle |
| Kurve c: | Probe c gemäß Tabelle |

Die beiden Proben b und c zeigen gegenüber der Probe a eine signifikante Verbesserung der Reflexionsfähigkeit gegenüber der Wärmestrahlung bzw. Hitzestrahlung. Das beste Ergebnis wird dabei mit Messing (Probe b) erzielt. Die Bedeutung dieses Ergebnisses soll nun anhand der Ladelufttechnologie dargelegt werfen.

Wird ein Ladeluftschlauch am Katalysator (ca. 1000 °C) eines Automobils vorbeigeführt, so liegt die Strahlungswärme bei ca. 300 °C. Die maximale Einsatztemperatur für beispielsweise FKM- oder VMQ-Schläuche liegt jedoch bei ca. 250 °C.

Mit dem Einsatz einer rußfreien Polymermischung gemäß Kennzeichen des Anspruchs 1 lässt sich über die verbesserte Reflexionsfähigkeit des Polymerwerkstoffes die Lebensdauer eines Ladeluftschlauches sowie bei anderen Artikeln erhöhen.

### Bezugszeichenliste

### (Teil der Beschreibung)

- 1: Schlauch (Ladeluftschlauch)
- 2: Innenschicht
- 3: Haftschicht (Zwischenschicht)
- 4: Festigkeitsträgerschicht
- 5: Außenschicht
- 6: Prüfaufbau
- 7: Wärmequelle
- 8: Wärmestrahlung
- 9: Probenkörper
- 10: Messpunkt

## Patentansprüche

1. Artikel mit einem Grundkörper aus einem Polymerwerkstoff, wobei die Artikeloberfläche vollständig oder teilweise einer Wärme oder Hitze ausgesetzt ist, **dadurch gekennzeichnet, dass** der Polymerwerkstoff des Grundkörpers vollständig oder teilweise aus einer rußfreien Polymermischung besteht, in der Mikropartikel mit Reflexionsfähigkeit eingemischt sind, wobei die Mikropartikel Metallpartikel sind, die aus Messing bestehen, und wobei der Artikel ein Schlauch (1) ist und wobei der Polymerwerkstoff eine vulkanisierte thermoplastfreie Kautschukmischung, enthaltend wenigstens eine Kautschukkomponente sowie Mischungsingredienzien, ist.

2. Artikel nach Anspruch 1, **dadurch gekennzeichnet, dass** die Mikropartikel pulverförmig vorliegen.

3. Artikel nach einem der Ansprüche 1 bis 2, **dadurch gekennzeichnet, dass** die Mikropartikel gleichmäßig verteilt in der rußfreien Polymermischung eingemischt sind.

4. Artikel nach einem der Ansprüche 1 bis 3, **dadurch gekennzeichnet, dass** die Mikropartikel in der rußfreien Polymermischung in einer Menge von 5 Gew.-% bis 30 Gew.-% vorhanden sind.

5. Artikel nach Anspruch 4, **dadurch gekennzeichnet, dass** die Mikropartikel in einer Menge von 5 Gew.-% bis 20 Gew.-% vorhanden sind.

6. Artikel nach Anspruch 4 oder 5, **dadurch gekennzeichnet, dass** die Mikropartikel in einer Menge von 5 Gew.-% bis 15 Gew.-% vorhanden sind.

7. Artikel nach Anspruch 1, **dadurch gekennzeichnet, dass** der Schlauch (1) wenigstens aus einer Innenschicht (2), einer eingebetteten Festigkeitsträgerschicht (4) und einer Außenschicht (5) besteht.

8. Artikel nach Anspruch 7, **dadurch gekennzeichnet, dass** bei dem Schlauch (1) zwischen der Innenschicht (2) und der Festigkeitsträgerschicht (4) eine Haftschicht (3) angeordnet ist.

9. Artikel nach einem der Ansprüche 1 bis 8, **dadurch gekennzeichnet, dass** der Schlauch (1) ein Ladeluftschlauch ist.

10. Artikel nach einem der Ansprüche 7 bis 9, **dadurch gekennzeichnet, dass** die Innenschicht (2) und/oder die Außenschicht (5) des Schlauches (1) vollständig aus der rußfreien Polymermischung besteht/bestehen, in der Mikropartikel mit Reflexionsfähigkeit eingemischt sind.

## Claims

1. Article comprising a main body made of a polymer material, wherein the article surface is entirely or partially exposed to warmth or heat, **characterized in that** the polymer material of the main body consists entirely or partially of a carbon black-free polymer mixture having reflective microparticles incorporated in it, wherein the microparticles are metal particles made of brass and wherein the article is a hose (1) and wherein the polymer material is a vulcanized thermoplastic-free rubber mixture containing at least one rubber component and mixture ingredients.

2. Article according to Claim 1, **characterized in that** the microparticles are in pulverulent form.

3. Article according to either of Claims 1 to 2, **characterized in that** the microparticles are incorporated in the carbon black-free polymer mixture such that they are uniformly distributed.

4. Article according to any of Claims 1 to 3, **characterized in that** the microparticles are present in the carbon black-free polymer mixture in an amount of 5% by weight to 30% by weight.

5. Article according to Claim 4, **characterized in that** the microparticles are present in an amount of 5% by weight 20% by weight.

6. Article according to Claim 4 or 5, **characterized in that** the microparticles are present in an amount of 5% by weight to 15% by weight.

7. Article according to Claim 1, **characterized in that** the hose (1) consists at least of an inner layer (2), an embedded strength member layer (4) and an outer layer (5).

8. Article according to Claim 7, **characterized in that** the hose (1) has an adhesion layer (3) arranged between the inner layer (2) and the strength member layer (4).

9. Article according to any of Claims 1 to 8, **characterized in that** the hose (1) is a charge air hose.

10. Article according to any of Claims 7 to 9, **characterized in that** the inner layer (2) and/or the outer layer (5) of the hose (1) consist/consists entirely of the carbon black-free polymer mixture having reflective microparticles incorporated in it.

## Revendications

1. Article comprenant un corps de base en un matériau polymère, la surface de l'article étant exposée en totalité ou en partie à une chaleur, **caractérisé en ce que** le matériau polymère du corps de base est constitué en totalité ou en partie par un mélange de polymère exempt de noir de carbone, dans lequel des microparticules ayant une aptitude à la réflexion sont incorporées, les microparticules étant des particules métalliques qui sont constituées par du laiton, et l'article étant un tuyau (1), et le matériau polymère étant un mélange de caoutchouc vulcanisé exempt de thermoplastique, contenant au moins un composant caoutchouc, ainsi que des ingrédients de mélange.

2. Article selon la revendication 1, **caractérisé en ce que** les microparticules se présentent sous la forme de poudre.

3. Article selon l'une quelconque des revendications 1 à 2, **caractérisé en ce que** les microparticules sont incorporées réparties uniformément dans le mélange de polymère exempt de noir de carbone.

4. Article selon l'une quelconque des revendications 1 à 3, **caractérisé en ce que** les microparticules sont présentes dans le mélange de polymère exempt de noir de carbone en une quantité de 5 % en poids à 30 % en poids.

5. Article selon la revendication 4, **caractérisé en ce que** les microparticules sont présentes en une quantité de 5 % en poids à 20 % en poids.

6. Article selon la revendication 4 ou 5, **caractérisé en ce que** les microparticules sont présentes en une quantité de 5 % en poids à 15 % en poids.

7. Article selon la revendication 1, **caractérisé en ce que** le tuyau (1) est constitué au moins par une couche intérieure (2), une couche de renfort intégrée (4) et une couche extérieure (5).

8. Article selon la revendication 7, **caractérisé en ce qu'**une couche adhésive (3) est agencée dans le tuyau (1) entre la couche intérieure (2) et la couche de renfort (4).

9. Article selon l'une quelconque des revendications 1 à 8, **caractérisé en ce que** le tuyau (1) est un tuyau d'air d'alimentation.

10. Article selon l'une quelconque des revendications 7 à 9, **caractérisé en ce que** la couche intérieure (2) et/ou la couche extérieure (5) du tuyau (1) sont constituées en totalité par le mélange de polymère exempt de noir de carbone, dans lequel des microparticules ayant une aptitude à la réflexion sont incorporées.
